(19) Europäisches Patentamt / European Patent Office / Office européen des brevets

(11) **EP 3 392 387 A1**

(12) **EUROPEAN PATENT APPLICATION**
published in accordance with Art. 153(4) EPC

(43) Date of publication:
24.10.2018 Bulletin 2018/43

(51) Int Cl.:
*D04H 3/04* (2012.01)
*B32B 5/02* (2006.01)
*B32B 5/12* (2006.01)
*B32B 5/00* (2006.01)
*B32B 5/06* (2006.01)
*D04B 21/14* (2006.01)

(21) Application number: 16875464.6

(22) Date of filing: 06.12.2016

(86) International application number:
PCT/JP2016/086183

(87) International publication number:
WO 2017/104481 (22.06.2017 Gazette 2017/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 14.12.2015 JP 2015243446

(71) Applicant: Mitsubishi Chemical Corporation
Tokyo 100-8251 (JP)

(72) Inventors:
• HARADA Koji
Tokyo 100-8251 (JP)
• ITOU Toshiyuki
Tokyo 100-8251 (JP)

(74) Representative: Ter Meer Steinmeister & Partner
Patentanwälte mbB
Nymphenburger Straße 4
80335 München (DE)

(54) **MULTIAXIAL-INLAY KNITTED FABRIC BASE MATERIAL PRODUCTION METHOD, MULTIAXIAL-INLAY KNITTED FABRIC BASE MATERIAL, AND FIBER-REINFORCED COMPOSITE MATERIAL**

(57) An object of the invention is to provide a method for producing a multiaxial-inlay knitted fabric base material with high productivity, a multiaxial-inlay knitted fabric base material that enables to produce a molded article, which is excellent in surface smoothness and has a high strength and a high elastic modulus, and a fiber-reinforced composite material including the multiaxial-inlay knitted fabric base material. a method for producing a multiaxial-inlay knitted fabric base material, the method comprising: conducting a pressurization and heating treatment to a multiaxial-inlay knitted fabric base material precursor (1) that includes a multiaxial stack (30) and a stitching thread (42) that may be formed into a restraining knitted fabric (40), which is disposed to restrain the multiaxial stack (30), in a specific condition, and a multiaxial-inlay knitted fabric base material in which an opening width (50) of the reinforcement fiber constituting the multiaxial-inlay knitted fabric base material is equal to or less than a nominal diameter of the stitching thread (42) that may be formed into a restraining knitted fabric (40).

FIG. 2

## Description

TECHNICAL FIELD

The present invention relates to a method for producing a multiaxial-inlay knitted fabric base material, a multiaxial-inlay knitted fabric base material, and a fiber-reinforced composite material.
The present application claims the priority of Japanese Patent Application No. 2015-243446 filed on December 14, 2015, the contents of which are incorporated herein by reference.

BACKGROUND ART

Fiber-reinforced composite materials obtained by composite formation of various reinforcement fibers and various matrix resins are lightweight and have excellent mechanical characteristics, and thus are widely used in aerospace application (such as aircraft members), automotive application (such as automotive members), sport application (such as sport tools and bicycle members), construction application (such as reinforcement materials of buildings), general industrial application, and the like.
As a method for producing a fiber-reinforced composite material, for example, a molding method in which a reinforcement fiber base material not impregnated with a matrix resin composition is stacked on a molding die, and the reinforcement fiber base material is impregnated with a matrix resin composition and then cured (such as a hand lay-up method, a resin transfer molding (RTM) method, or a vacuum assisted resin transfer molding (VaRTM) method) is known.
As a reinforcement fiber base material to be used in production of the fiber-reinforced composite material, a reinforcement fiber woven fabric base material using a reinforcement fiber thread as either or both of warp and weft; a multiaxial-inlay knitted fabric base material (also referred to as a multiaxial stitched base material or a multiaxial woven fabric base material) in which a multiaxial stack formed by stacking two or more of reinforcing fiber sheets in which a plurality of reinforcement fibers are aligned in one axis direction such that axis directions of reinforcement fibers of the respective reinforcing fiber sheets become two or more is restrained by a restraining knitted fabric knitted by stitching thread such that these reinforcing fiber sheets are integrally formed; and the like are exemplified.
The multiaxial-inlay knitted fabric base material among these reinforcement fiber base materials has been attracted attention from the viewpoint that the multiaxial-inlay knitted fabric base material is excellent in productivity as compared to the reinforcement fiber woven fabric base material since time and effort is not required for knitting reinforcement fiber threads, is also excellent in mechanical characteristics since there is no space between threads, and enables to produce an inexpensive fiber-reinforced composite material since the weight of the reinforcement fibers can be increased so that the stacking work is considerably saved.
However, the reinforcement fiber of the multiaxial-inlay knitted fabric base material is pushed away by a stitching thread in a part through which the stitching thread penetrates to the reinforcing fiber sheet, and a substantially rhombic region where a reinforcement fiber does not exist in the periphery of the stitching thread, a socalled opening, is generated. Hence, when the matrix resin composition impregnated in the multiaxial-inlay knitted fabric base material is cured, this opening portion causes the shrinkage of the resin, and thus a problem arises in that the surface smoothness of a molded article is decreased. In addition, due to the bending of the reinforcement fiber, a problem also arises in that the strength or elastic modulus of the molded article is decreased.
In order to suppress a decrease in surface smoothness of the molded article as described above, a multiaxial-inlay knitted fabric base material has been proposed in which a low-melting-point polymer having a melting point of 80 to 200°C is used as a material for a stitching thread, the stitching thread is dissolved at the time of impregnating of a resin, and the reinforcement fiber is caused to be dispersed so that the shrinkage of openings is expected (Patent Literature 1).

CITATION LIST

PATENT LITERATURE

Patent Literature 1: JP 2002-227066 A

SUMMARY OF THE INVENTION

PROBLEM TO BE SOLVED BY THE INVENTION

In the multiaxial-inlay knitted fabric base material of Patent Literature 1, since there is no external force promoting the dispersion of the reinforcement fiber even when the stitching thread is melted at the time of impregnating of the resin, it is difficult to sufficiently shrink openings. In addition, since a stitching thread formed by a low-melting-point polymer is generally inferior to a stitching thread typically used in strength, there are problems of inferior productivity such as the breakage of the stitching thread at the time of producing a multiaxial-inlay knitted fabric base material and occurrence of separation of the reinforcement fiber and disturbance of openings.

Under such circumstances, an object of the invention is to provide a method for producing a multiaxial-inlay knitted fabric base material with high productivity, a multiaxial-inlay knitted fabric base material that enables to produce a molded article, which is excellent in surface smoothness and has a high strength and a high elastic modulus, and a fiber-reinforced composite material including the multiaxial-inlay knitted fabric base material.

MEANS FOR SOLVING PROBLEM

The invention has the following aspects.

[1] A method for producing a multiaxial-inlay knitted fabric base material, the method including: conducting a pressurization and heating treatment to a multiaxial-inlay knitted fabric base material precursor that includes a multiaxial stack, which is formed by stacking two or more of reinforcing fiber sheets in which a plurality of reinforcement fibers are aligned in one axis direction, and a stitching thread, which is disposed to restrain the multiaxial stack and formed from a material having a glass transition temperature and a melting point,

in which a heating temperature in the pressurization and heating treatment is a temperature higher than the glass transition temperature of the stitching thread by 10°C or higher and lower than the melting point of the stitching thread by 10°C or higher.

[2] The method for producing a multiaxial-inlay knitted fabric base material described in [1], in which the multiaxial stack is formed by stacking two or more of the reinforcing fiber sheets such that axis directions of reinforcement fibers of the respective reinforcing fiber sheets become two or more.

[3] The method for producing a multiaxial-inlay knitted fabric base material described in [1] or [2], in which the stitching thread forms a restraining knitted fabric.

[4] The method for producing a multiaxial-inlay knitted fabric base material described in any one of [1] to [3], in which a load line pressure in the pressurization and heating treatment is 15 N/cm or more and 150 N/cm or less.

[5] The method for producing a multiaxial-inlay knitted fabric base material described in any one of [1] to [4], in which pressurizing and heating are simultaneously conducted in the pressurization and heating treatment.

[6] The method for producing a multiaxial-inlay knitted fabric base material described in any one of [1] to [5], in which the reinforcement fiber is a carbon fiber.

[7] The method for producing a multiaxial-inlay knitted fabric base material described in any one of [1] to [6], in which the stitching thread is formed from one or more materials selected from the group consisting of polyester and nylon.

[8] A multiaxial-inlay knitted fabric base material including a multiaxial stack, which is formed by stacking two or more of reinforcing fiber sheets in which a plurality of reinforcement fibers are aligned in one axis direction, and a stitching thread, which is disposed to restrain the multiaxial stack,

in which a nominal diameter d [μm] of the stitching thread defined as follows by using a fineness s (dtex), a density ρ (g/cm³), and a circumference ratio π of the stitching thread:

[Math. 1]

$$d = 20 \times \sqrt{s/(\rho \times \pi)}$$

and an opening width D [μm] of the reinforcement fiber generated in a site through which the stitching thread penetrates to the reinforcing fiber sheet satisfy Formula (1).

$$D \le d \qquad (1)$$

[9] The multiaxial-inlay knitted fabric base material described in [8], in which the reinforcement fiber is a carbon fiber.

[10] The multiaxial-inlay knitted fabric base material described in [8] or [9], in which the stitching thread is formed from one or more materials selected from the group consisting of polyester and nylon.

[11] The multiaxial-inlay knitted fabric base material described in any one of [8] to [10], in which the stitching thread forms a restraining knitted fabric.

[12] The multiaxial-inlay knitted fabric base material described in [11], in which a knitting structure of the restraining knitted fabric is one or more knitting structures selected from the group consisting of chain stitch, single tricot stitch, and tricot pillar stitch.

[13] A fiber-reinforced composite material including the multiaxial-inlay knitted fabric base material described in any one of [8] to [12], and a matrix resin.

EFFECT OF THE INVENTION

According to the method for producing a multiaxial-inlay knitted fabric base material of the invention, it is possible to produce a multiaxial-inlay knitted fabric base material that enables to produce a molded article, which is excellent in surface smoothness and has a high strength and a high elastic modulus, with high productivity. In addition, according to the method for producing a multiaxial-inlay knitted fabric base material of the invention, since the breakage of the stitching thread caused by melting of the stitching thread is prevented, it is possible to suppress occurrence of undesirable influences, which may result in disadvantages in productivity, such as separation of the reinforcement fiber and disturbance of openings in the reinforcing fiber sheet.

Since the multiaxial-inlay knitted fabric base material of the invention has small openings of the reinforcement fibers, the multiaxial-inlay knitted fabric base material has less accumulation of a resin generated in the opening portions and is excellent in surface smoothness of a molded article, and it is possible to obtain a molded article which has a high strength and a high elastic modulus and in which the bending of the reinforcement fiber is small.

Since the fiber-reinforced composite material of the invention includes the multiaxial-inlay knitted fabric base material of the invention, the fiber-reinforced composite material is excellent in surface smoothness and has a high strength and a high elastic modulus.

BRIEF DESCRIPTION OF DRAWINGS

Fig. 1 is a schematic diagram illustrating an example of a multiaxial-inlay knitted fabric base material precursor; and
Fig. 2 is a conceptual diagram illustrating a state where an opening in the multiaxial-inlay knitted fabric base material precursor is shrunk by a method for producing a multiaxial-inlay knitted fabric base material of the invention.

MODE(S) FOR CARRYING OUT THE INVENTION

Definition of terms described below applies to the description and claims of the invention.

The term "reference direction of a multiaxial-inlay knitted fabric base material" means a wale direction of a restraining knitted fabric. In addition, the reference direction of the multiaxial-inlay knitted fabric base material corresponds to the 0° direction, and a direction orthogonal to the reference direction of the multiaxial-inlay knitted fabric base material corresponds to the 90° direction.

The term "wale" means a column of vertically consecutive needle loops, and the term "wale direction of the restraining knitted fabric" means a direction of the column of vertically consecutive needle loops in the restraining knitted fabric.

The term "course" means a column of horizontally arranged needle loops, and the term "course direction of the restraining knitted fabric" means a direction of the column of horizontally arranged needle loops in the restraining knitted fabric.

The term "needle loop" means a mountain portion of the loop in the knitted fabric.

The term "sinker loop" means a valley portion of the loop in the knitted fabric. Specifically, the sinker loop is a portion connecting the needle loops.

The term "closed loop" is a basic knitted loop of warp knit and means a crossed loop.

The term "open loop" is a basic knitted loop of warp knit and means a loop opened to right and left sides without being crossed.

The term "warp knit" is a knit fabric obtained by connecting loops in the vertical direction.

<Multiaxial-Inlay Knitted Fabric Base Material>

A multiaxial-inlay knitted fabric base material of the invention includes a multiaxial stack formed by stacking two or more of reinforcing fiber sheets in which a plurality of reinforcement fibers are aligned in one axis direction. In the multiaxial-inlay knitted fabric base material of the invention, from the viewpoint that it is possible to provide excellent mechanical characteristics in a plurality of directions to a target fiber-reinforced composite material, it is preferable that the reinforcing fiber sheets are stacked such that axis directions of reinforcement fibers of the respective reinforcing fiber sheets become two or more.

The multiaxial-inlay knitted fabric base material of the invention further includes a stitching thread which is disposed to restrain the multiaxial stack. In the multiaxial-inlay knitted fabric base material of the invention, it is preferable that this stitching thread forms a restraining knitted fabric in which two or more of the reinforcing fiber sheets constituting the multiaxial stack are integrally knitted, from the viewpoint of maintaining the unity of the multiaxial stack in a process of producing a target fiber-reinforced composite material.

The restraining of the multiaxial stack by the restraining knitted fabric specifically means that needle loops of the restraining knitted fabric are formed along a second face that is one face of the multiaxial stack, a sinker loop, which connects the needle loops, of the restraining knitted fabric is caused to penetrate in the thickness direction of the multiaxial stack, a part thereof is formed along a first face that is the other face of the multiaxial stack, and thus the multiaxial stack is restrained by the restraining knitted fabric so as to be integrally formed.

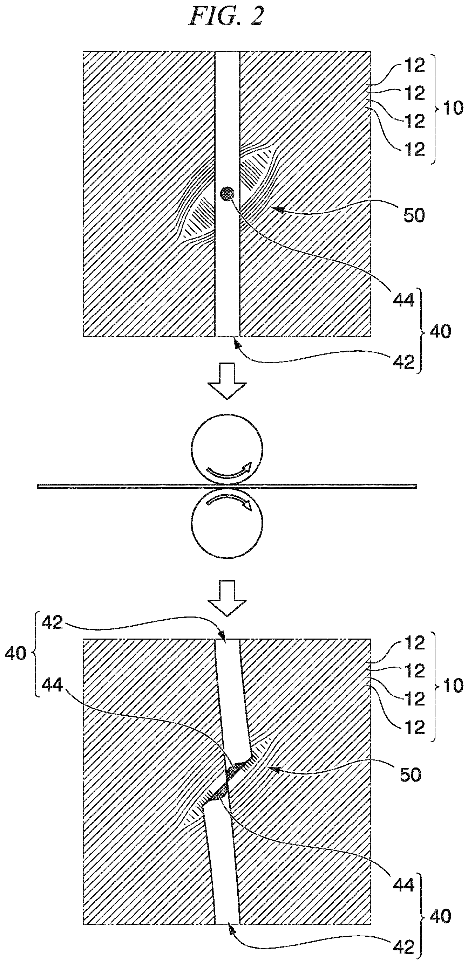

Fig. 2 is a conceptual diagram illustrating a state where an opening in the multiaxial-inlay knitted fabric base material precursor is shrunk by a method for producing a multiaxial-inlay knitted fabric base material of the invention, and the view on the lower section of Fig. 2 is a partial front view of the multiaxial-inlay knitted fabric base material when viewed from the direction of the first face.

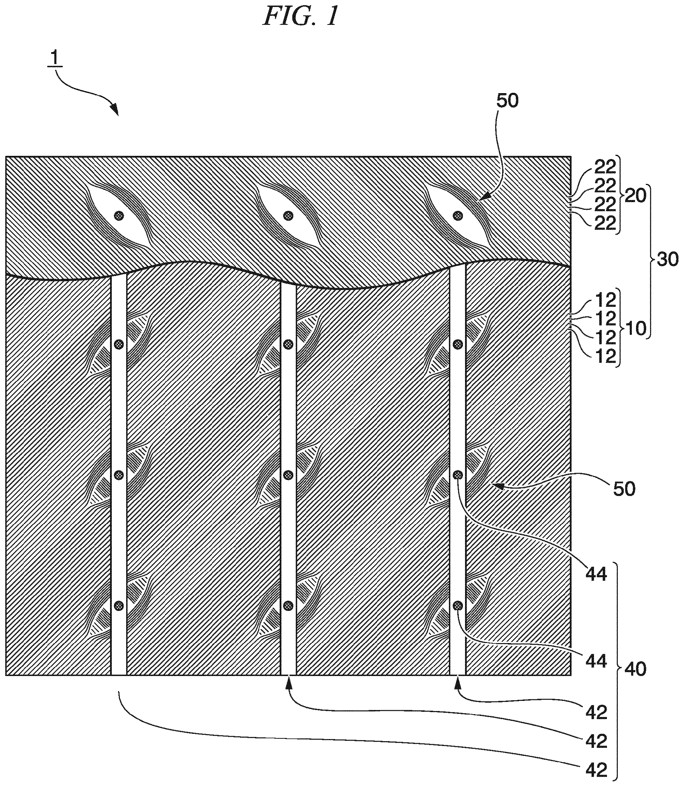

The multiaxial-inlay knitted fabric base material includes a first reinforcing fiber sheet 10 including the first face of the multiaxial-inlay knitted fabric base material and a second reinforcing fiber sheet 20 including the second face of the multiaxial-inlay knitted fabric base material (see Fig. 1). The axis direction of a reinforcement fiber 12 of the first reinforcing fiber sheet 10 is disposed at +45° with respect to the reference direction (0° direction) of the multiaxial-inlay knitted fabric base material, the axis direction of a reinforcement fiber 22 of the second reinforcing fiber sheet 20 is disposed at -45° with respect to the reference direction (0° direction) of the multiaxial-inlay knitted fabric base material, and the first reinforcing fiber sheet 10 and the second reinforcing fiber sheet 20 are stacked. In addition, the multiaxial-inlay knitted fabric base material includes a restraining knitted fabric 40 restraining a multiaxial stack 30 formed by the first reinforcing fiber sheet 10 and the second reinforcing fiber sheet 20. The restraining knitted fabric 40 is knitted by chain stitching of a stitching thread 42.

In a multiaxial-inlay knitted fabric base material precursor 1 in Fig. 1, since a sinker loop of the restraining knitted fabric 40 penetrates in the thickness direction in a penetration site 44 of the sinker loop of the stitching thread, the reinforcement fiber 12 and the reinforcement fiber 22 constituting the reinforcing fiber sheet 10 and the reinforcing fiber sheet 20 are pushed away in the penetration site 44 of the sinker loop of the stitching thread, and substantially rhombic openings 50 are generated around the stitching threads of the front surface. In the multiaxial-inlay knitted fabric base material of the invention in the view on the lower section of Fig. 2, the openings 50 are shrunk by the method for producing a multiaxial-inlay knitted fabric base material of the invention as compared to the openings 50 of the multiaxial-inlay knitted fabric base material precursor 1.

In a case where the multiaxial-inlay knitted fabric base material is used in the front surface of a molded article, the shrinkage of the resin is caused by portions of the openings 50, which results in a decrease in surface smoothness of the molded article. Therefore, the opening 50 is desirably small. Incidentally, when the size of the opening is quantitatively handled, the maximum length in a direction orthogonal to the reinforcement fiber direction on the front surface which is not bent by the influence of the opening is regarded as an opening width D, and the opening width D is preferably equal to or less than the nominal diameter of the stitching thread.

(Reinforcement Fiber)

The reinforcement fiber is formed from long fibers of various fibers.

Examples of a material for the reinforcement fiber include inorganic fibers, organic fibers, metallic fibers, and composite fibers thereof.

Examples of the inorganic fibers include carbon fibers, graphitic fibers, silicon carbide fibers, alumina fibers, tungsten carbide fibers, boron fibers, and glass fibers.

Examples of the organic fibers include aramid fibers, high-density polyethylene fibers, nylon fibers, and polyester fibers.

Examples of the metallic fibers include stainless steel fibers, iron fibers, and carbon fibers covered with a metal.

One kind of the reinforcement fibers may be used singly or two or more kinds thereof may be used in combination.

As the reinforcement fiber, from the viewpoint of having excellent mechanical characteristics of the fiber-reinforced composite material such as strength and elastic modulus, one or more reinforcement fibers selected from the group consisting of carbon fibers, glass fibers, and aramid fibers are preferable, the reinforcement fiber more preferably includes a carbon fiber, and the reinforcement fiber is further preferably a carbon fiber.

In a case where a carbon fiber is used as the reinforcement fiber, from the viewpoint of having excellent strength and productivity, the fineness of the carbon fiber is preferably 0.1 to 2.4 dtex.

(Reinforcing Fiber Sheet)

The reinforcing fiber sheet is a sheet in which a plurality of reinforcement fibers are aligned in one axis direction to be substantially parallel to each other.

As the reinforcing fiber sheet, from the viewpoint of obtaining a fiber-reinforced composite material with less crimp of the reinforcement fiber and excellent mechanical characteristics, a non-crimped fabric (NCF) is preferable.

The weight of the reinforcement fibers per one reinforcing fiber sheet is preferably 100 to 2000 $g/m^2$ and more preferably 200 to 800 $g/m^2$. When the weight of the reinforcement fibers per one reinforcing fiber sheet is equal to or more than the lower limit, it is possible to obtain an uniform multiaxial-inlay knitted fabric base material with stable mechanical characteristics and with less gap caused by restraining at the time of stitching. When the weight of the reinforcement fibers per one reinforcing fiber sheet is equal to or less than the upper limit, it is possible to obtain a multiaxial-inlay knitted fabric base material with excellent mechanical characteristics and with less fluff caused by needle penetration at the time of stitching.

In a case where a carbon fiber is used as the reinforcement fiber, the thickness per one reinforcing fiber sheet is preferably 0.1 to 2 mm and more preferably 0.2 to 0.8 mm.

(Multiaxial Stack)

The multiaxial stack is a laminate body in which two or more of the reinforcing fiber sheets are stacked. In the multiaxial stack, two or more of the reinforcing fiber sheets are preferably stacked such that axis directions of reinforcement fibers of the respective reinforcing fiber sheets become two or more.

As for the multiaxial stack, from the viewpoint of having excellent mechanical characteristics in a plurality of directions and the viewpoint that thermal warpage at the time of molding can be suppressed, the two or more axis directions are preferably orthogonal to each other and more preferably symmetrical to the reference direction of the multiaxial-inlay knitted fabric base material.

In a case where the multiaxial stack is formed by two reinforcing fiber sheets, there are exemplified an embodiment (+45/-45) in which a first reinforcing fiber sheet having an axis direction of the reinforcement fiber of +45° with respect to the reference direction (0° direction) of the multiaxial-inlay knitted fabric base material and a second reinforcing fiber sheet having an axis direction of the reinforcement fiber of -45° are laminated, an embodiment (0/+90) in which a first reinforcing fiber sheet having an axis direction of the reinforcement fiber of 0° and a second reinforcing fiber sheet having an axis direction of the reinforcement fiber of +90° are laminated, and the like.

Further, in a case where the multiaxial stack is formed by three reinforcing fiber sheets, there are exemplified an embodiment (0/+45/-45) in which a reinforcing fiber sheet having an axis direction of the reinforcement fiber of 0°, a reinforcing fiber sheet having an axis direction of the reinforcement fiber of +45°, and a reinforcing fiber sheet having an axis direction of the reinforcement fiber of -45° are laminated in this order, an embodiment (+45/0/-45) in which a reinforcing fiber sheet having an axis direction of the reinforcement fiber of +45°, a reinforcing fiber sheet having an axis direction of the reinforcement fiber of 0°, and a reinforcing fiber sheet having an axis direction of the reinforcement fiber of -45° are laminated in this order, an embodiment (0/+60/-60) in which a reinforcing fiber sheet having an axis direction of the reinforcement fiber of 0°, a reinforcing fiber sheet having an axis direction of the reinforcement fiber of +60°, and a reinforcing fiber sheet having an axis direction of the reinforcement fiber of -60° are laminated in this order, an embodiment (+60/0/-60) in which a reinforcing fiber sheet having an axis direction of the reinforcement fiber of +60°, a reinforcing fiber sheet having an axis direction of the reinforcement fiber of 0°, a reinforcing fiber sheet having an axis direction of the reinforcement fiber of -60° are laminated in this order, and the like.

Furthermore, in a case where the multiaxial stack is formed by four reinforcing fiber sheets, there are exemplified an embodiment (+45/-45/-45/+45) in which a reinforcing fiber sheet having an axis direction of the reinforcement fiber of +45°, a reinforcing fiber sheet having an axis direction of the reinforcement fiber of -45°, a reinforcing fiber sheet having an axis direction of the reinforcement fiber of -45°, and a reinforcing fiber sheet having an axis direction of the reinforcement fiber of +45° are laminated in this order, an embodiment (+45/-45/+45/-45) in which a reinforcing fiber sheet having an axis direction of the reinforcement fiber of +45°, a reinforcing fiber sheet having an axis direction of the reinforcement fiber of -45°, a reinforcing fiber sheet having an axis direction of the reinforcement fiber of +45°, and a reinforcing fiber sheet having an axis direction of the reinforcement fiber of -45° are laminated in this order, an embodiment (0/+45/+90/-45) in which a reinforcing fiber sheet having an axis direction of the reinforcement fiber of 0°, a reinforcing fiber sheet having an axis direction of the reinforcement fiber of +45°, a reinforcing fiber sheet having an axis direction of the reinforcement fiber of +90°, and a reinforcing fiber sheet having an axis direction of the reinforcement fiber of -45° are laminated in this order, and the like.

The positive and negative of the angles of the axis directions of the reinforcement fibers may invert to each other, respectively.

(Stitching Thread)

The stitching thread is disposed to restrain the multiaxial stack.

Further, the stitching thread according to the invention has a glass transition temperature and a melting point, has a certain degree of strength and stiffness at a normal temperature, and is demanded that a trouble such as breakage of threads at the time of production of the multiaxial-inlay knitted fabric base material is less likely to occur and the stitching thread is easily softened when being heated so as to weaken the restraining to the reinforcement fiber, but is not easily broken. Hence, the stitching thread preferably has a glass transition temperature of 40 to 100°C and a melting point of 200°C or higher.

Examples of a material having the glass transition temperature and the melting point as described above may include polyester, nylon, polyethylene, and polypropylene, and from the viewpoint of cost and strength, one or more materials selected from the group consisting of polyester and nylon are preferable, and polyester is more preferable.

The thickness of the stitching thread is preferably 50 to 400 dtex and more preferably 70 to 300 dtex. When the thickness of the stitching thread is equal to or more than the lower limit, breakage of threads at the time of production of the multiaxial-inlay knitted fabric base material is less likely to occur. When the thickness of the stitching thread is equal to or less than the upper limit, the opening does not become too large, and the surface smoothness of a molding article is not impaired.

Since the stitching thread is easily deformed, it is difficult to directly measure the geometric configuration of the cross-section such as a diameter. Herein, when the thickness of the stitching thread is quantitatively handled, a cross-sectionally circular single fiber having the same material and the same fineness as those of the stitching thread is assumed, and the diameter thereof is regarded as a nominal diameter d of the stitching thread. The nominal diameter d (unit: $\mu$m) is defined by the following formula using a fineness s (unit: dtex), a density $\rho$ (unit: g/cm$^3$), and a circumference ratio $\pi$.

[Math. 2]

$$d = 20 \times \sqrt{s / (\rho \times \pi)}$$

(Restraining Knitted Fabric)

It is preferable that the stitching thread forms a restraining knitted fabric which is knitted such that two or more of reinforcing fiber sheets constituting the multiaxial stack are integrally formed.

The knitting structure of the restraining knitted fabric is not particularly limited, and well-known knitting structures can be employed. Examples of the knitting structure of the restraining knitted fabric include chain stitch, single tricot stitch, tricot pillar stitch, single cord stitch, single satin stitch, single velvet stitch, plain tricot stitch, double cord stitch, and half tricot stitch. The knitting structure of the restraining knitted fabric is preferably one or more knitting structures selected from the group consisting of chain stitch, single tricot stitch, and tricot pillar stitch, and is more preferably chain stitch or single tricot stitch.

The knitted loop of the restraining knitted fabric is not particularly limited, and may be a closed loop, an open loop, or a combination of the closed loop and the open loop.

The density of the wale in the course direction in the restraining knitted fabric is preferably 1.4 to 6.7 times/cm and more preferably 2.0 to 4.0 times/cm. When the density of the wale in the course direction in the restraining knitted fabric is equal to or more than the lower limit, the restraining of the multiaxial stack does not loose, and handleability is facilitated. When the density of the wale in the course direction in the restraining knitted fabric is equal to or less than the upper limit, an increase in the number of loops is suppressed so that favorable productivity can be maintained.

The interval between the wales in the course direction in the restraining knitted fabric is preferably 2.5 to 25.4 mm and more preferably 5.0 to 10.2 mm. When the interval between the wales in the course direction in the restraining knitted fabric is equal to or more than the lower limit, favorable productivity can be maintained. When the interval between the wales in the course direction in the restraining knitted fabric is equal to or less than the upper limit, the restraining of the multiaxial stack does not loose, and handleability is facilitated.

(Method for Producing Multiaxial-Inlay Knitted Fabric Base Material)

The method for producing a multiaxial-inlay knitted fabric base material of the invention is characterized in that, as illustrated in Fig. 2, a pressurization and heating treatment is conducted to a multiaxial-inlay knitted fabric base material precursor that includes a multiaxial stack and a restraining knitted fabric disposed to restrain the multiaxial stack. Herein, the multiaxial-inlay knitted fabric base material precursor means a multiaxial-inlay knitted fabric base material before the pressurization and heating treatment is conducted.

The multiaxial-inlay knitted fabric base material of the invention includes a multiaxial stack and a restraining knitted fabric which is disposed to restrain the multiaxial stack, and a nominal diameter d [$\mu$m] of the stitching thread constituting the restraining knitted fabric and an opening width D [$\mu$m] of the reinforcement fiber generated in a site through which the stitching thread penetrates to the reinforcing fiber sheet satisfy Formula (1).

$$D \leq d \qquad (1)$$

However, in the multiaxial-inlay knitted fabric base material like the multiaxial-inlay knitted fabric base material precursor which is not subjected to the pressurization and heating treatment as illustrated in the upper section of Fig. 2, the opening width of the reinforcement fiber generated in a site through which the stitching thread penetrates to the reinforcing fiber sheet is widened up to the thickness of a needle used when the stitching thread is caused to penetrate to the reinforcing fiber sheet, and is further widened by the tension of the stitching thread. Therefore, in such a multiaxial-inlay knitted fabric base material, the above Formula (1) is not satisfied.

In the method for producing a multiaxial-inlay knitted fabric base material of the invention, the pressurization and heating treatment as illustrated in the middle section of Fig. 2 is conducted to the multiaxial-inlay knitted fabric base material precursor as illustrated in the upper section of Fig. 2. In the pressurization and heating treatment, pressurizing and heating may be simultaneously conducted or heating may be conducted prior to pressurizing. In the pressurization and heating treatment, it is preferable that pressurizing and heating are simultaneously conducted. The reason for this is that the since the stitching thread according to the invention is easily softened when being heated, the restraining to the reinforcement fiber is weakened by the heating, but at the time of this, the reinforcement fiber is moved in a direction in which the reinforcement fiber is filled in the opening by the pressurizing in which pressurizing is conducted to the multiaxial-inlay knitted fabric base material precursor in the thickness direction, so that the opening of the multiaxial-inlay knitted fabric base material illustrated in the lower section of Fig. 2 can be sufficiently shrunk as compared to the case of the opening of the multiaxial-inlay knitted fabric base material precursor illustrated in the upper section of Fig. 2.

Therefore, the heating temperature in the pressurization and heating treatment is necessary to set to a temperature at which the stitching thread can be softened, and is required to be a temperature at which the breakage of the stitching thread is prevented. Specifically, the heating temperature in the pressurization and heating treatment is necessary to set to a temperature higher than the glass transition temperature of the stitching thread in order to soften the stitching thread, and is necessary to set to a temperature lower than the melting point of the stitching thread in order to prevent the breakage of the stitching thread. The heating temperature is preferably a temperature higher than the glass transition temperature of the stitching thread by 10°C or higher and lower than the melting point of the stitching thread by 10°C or higher. From the viewpoint of the amount of energy used, the heating temperature is more preferably a temperature higher than the glass transition temperature of the stitching thread by 10°C or higher and lower than the melting point of the stitching thread by 50°C or higher.

Meanwhile, the load line pressure in the pressurization and heating treatment is preferably 15 N/cm or more and 150 N/cm or less and more preferably 20 N/cm or more and 50 N/cm or less. When the load line pressure in the pressurization and heating treatment is equal to or more than the lower limit, the reinforcement fiber can be sufficiently moved to the direction in which the reinforcement fiber is filled in the opening. When the load line pressure in the pressurization and heating treatment is equal to or less than the upper limit, the breakage of the stitching thread is prevented, and it is possible to suppress occurrence of undesirable influences such as separation of the reinforcement fiber and disturbance of openings.

As the method of conducting the pressurization and heating treatment, methods using a roll pressing apparatus, a flat pressing apparatus, a hard-sphere opening apparatus, an air-jet opening apparatus, and the like can be exemplified, and from the viewpoint that the continuous treatment can be conducted, a method using a roll pressing apparatus as illustrated in the middle section of Fig. 2 is preferable.

<Fiber-Reinforced Composite Material>

The fiber-reinforced composite material of the invention includes the multiaxial-inlay knitted fabric base material of the invention and a matrix resin.

(Matrix Resin)

As a matrix resin, a cured product of a thermosetting resin, and a thermoplastic resin are exemplified.

Examples of the thermosetting resin include an epoxy resin, a vinylester resin, an unsaturated polyester resin, a polyimid resin, a maleimide resin, and a phenolic resin, and from the viewpoint of being excellent in cost, handleability, and ease of control of physical properties, an epoxy resin is preferable.

One kind of the thermosetting resins may be used singly or two or more kinds thereof may be used in combination.

Examples of the thermoplastic resin include polyamide (nylon 6, nylon 66, or the like), polyolefin (polyethylene, polypropylene, or the like), modified polyolefin, polyester (polyethylene terephthalate, polybutylene terephthalate, or the like), polycarbonate, polyamide imide, polyphenylene oxide, polysulfone, polyether sulfone, polyether ether ketone, polyether imide, polystyrene, an acrylonitrile-butylene-styrene copolymer, polyphenylene sulfide, liquid crystal polyester, and an acrylonitrile-styrene copolymer.

One kind of the thermoplastic resins may be used singly or two or more kinds thereof may be used in combination. In addition, like copolymer nylon of nylon 6 and nylon 66, those which are copolymerized may be used.

The matrix resin may contain one or more additives depending on demand characteristics of the fiber-reinforced composite material.

Examples of the additive include a flame retardant, a weathering resistance improver, an antioxidant, a heat stabilizer, an ultraviolet absorber, a plasticizer, a lubricant, a coloring agent, a compatibilizing agent, and a conductive filler.

(Method for Producing Fiber-Reinforced Composite Material)

The fiber-reinforced composite material of the invention can be produced by disposing the multiaxial-inlay knitted fabric base material of the invention not impregnated with a matrix resin composition on a molding die, impregnating the multiaxial-inlay knitted fabric base material with the matrix resin composition to form a preform, and then molding and curing the preform.

Further, the fiber-reinforced composite material of the invention can be produced by impregnating the multiaxial-inlay knitted fabric base material of the invention with a matrix resin composition to form a prepreg and molding and curing the prepreg.

Also in any of the methods exemplified above, one sheet of the multiaxial-inlay knitted fabric base material of the invention may be used or two or more sheets of the multiaxial-inlay knitted fabric base material may be stacked and then used.

EXAMPLES

Hereinafter, the invention will be described in detail by means of Examples and Comparative Examples, but the invention is not limited to the following description as long as it does not depart from the gist of the invention.

[Measurement of Opening Width]

In an opening generated in a part through which the stitching thread penetrates to the reinforcing fiber sheet, the maximum length in a direction orthogonal to the reinforcement fiber direction on the front surface which is not bent by the influence of the opening was regarded as an opening width. A side at which the sinker loop of the restraining knitted fabric is present was regarded as a front side, a test piece subjected to the pressurization and heating treatment (multiaxial-inlay knitted fabric base material) was observed with a microscope (manufactured by KEYENCE CORPORATION, VHX-5000) from a direction orthogonal to the surface at the front side, widths of about 60 openings in a 30 mm $\times$ 30 mm region centered on the sample were measured by using the length measurement function of the microscope configured by a reference plate, and then an average value thereof was regarded as the opening width.

[Measurement of Surface Roughness]

The surface roughness Ra (center line average value) was measured using a surface roughness measuring instrument (Mitutoyo Corporation, SURFTEST 402) under the setting conditions of a range of 5 $\mu$m, a reference length of 2.5 mm, and the number of measurement sections of 5.

(Example 1)

A reinforcing fiber sheet in which a plurality of reinforcement fibers are aligned in one direction and the weight of the reinforcement fibers is 150 g/m$^2$ was produced by using a carbon fiber (manufactured by Mitsubishi Rayon Co., Ltd., Pyrofile (registered trademark) TRW40 50L) as the reinforcement fiber.

Two reinforcing fiber sheets thus obtained were stacked such that axis directions of the reinforcement fibers were orthogonal to each other to obtain a multiaxial stack.

The multiaxial stack was restrained by using a chain stitched restraining knitted fabric formed by knitting polyester threads (manufactured by Tenzler GmBH, dtex 78f36 text. roh halbmatt, 78 dtex, 36 filaments, glass transition temperature: 80°C, melting point: 220°C, density: 1.4 g/cm$^3$, nominal diameter: 84.2 μm) such that the directions of the reinforcement fibers became +45°/-45° with respect to the reference direction of the multiaxial-inlay knitted fabric base material and then integrally formed, thereby producing a multiaxial-inlay knitted fabric base material precursor as illustrated in Fig. 1. The density of the wale in the course direction in the restraining knitted fabric was 3 times/cm, and the interval between the wales in the course direction was 5 mm.

A 100 mm × 100 mm test piece was cut from the multiaxial-inlay knitted fabric base material, and a roll-pressing treatment was conducted to the test piece by using a roll press apparatus (manufactured by ASAHI CORPORATION, JR-600LTSW) under the conditions of a heating temperature of 150°C and a load line pressure of 37 N/cm, thereby obtaining a multiaxial-inlay knitted fabric base material.

The opening width in the obtained multiaxial-inlay knitted fabric base material was 72.5 μm.

(Comparative Example 1)

A multiaxial-inlay knitted fabric base material was obtained in the same manner as in Example 1, except that the roll-pressing treatment was not conducted.

The opening width in the obtained multiaxial-inlay knitted fabric base material was 363.2 μm.

(Example 2)

A multiaxial-inlay knitted fabric base material was obtained in the same manner as in Example 1, except that a single tricot stitch restraining knitted fabric was used as the restraining knitted fabric.

The opening width in the obtained multiaxial-inlay knitted fabric base material was 37.3 μm.

(Comparative Example 2)

A multiaxial-inlay knitted fabric base material was obtained in the same manner as in Example 2, except that the roll-pressing treatment was not conducted.

The opening width in the obtained multiaxial-inlay knitted fabric base material was 126.7 μm.

(Example 3)

A multiaxial-inlay knitted fabric base material was obtained in the same manner as in Example 1, except that the load line pressure in the roll-pressing treatment was set to 30 N/cm.

The opening width in the obtained multiaxial-inlay knitted fabric base material was 58.3 μm.

(Example 4)

A multiaxial-inlay knitted fabric base material was obtained in the same manner as in Example 1, except that the load line pressure in the roll-pressing treatment was set to 23 N/cm.

The opening width in the obtained multiaxial-inlay knitted fabric base material was 70.6 μm.

(Example 5)

A multiaxial-inlay knitted fabric base material was obtained in the same manner as in Example 1, except that the load line pressure in the roll-pressing treatment was set to 15 N/cm.

The opening width in the obtained multiaxial-inlay knitted fabric base material was 80.1 μm.

(Example 6)

A multiaxial-inlay knitted fabric base material was obtained in the same manner as in Example 1, except that the heating temperature in the roll-pressing treatment was set to 200°C.
The opening width in the obtained multiaxial-inlay knitted fabric base material was 62.4 μm.

(Example 7)

A multiaxial-inlay knitted fabric base material was obtained in the same manner as in Example 1, except that the heating temperature in the roll-pressing treatment was set to 180°C.
The opening width in the obtained multiaxial-inlay knitted fabric base material was 59.8 μm.

(Example 8)

A multiaxial-inlay knitted fabric base material was obtained in the same manner as in Example 1, except that the heating temperature in the roll-pressing treatment was set to 120°C.
The opening width in the obtained multiaxial-inlay knitted fabric base material was 72.4 μm.

(Example 9)

A multiaxial-inlay knitted fabric base material was obtained in the same manner as in Example 1, except that the heating temperature in the roll-pressing treatment was set to 100°C.
The opening width in the obtained multiaxial-inlay knitted fabric base material was 72.9 μm.

(Example 10)

A multiaxial-inlay knitted fabric base material was obtained in the same manner as in Example 1, except that the heating temperature in the roll-pressing treatment was set to 90°C.
The opening width in the obtained multiaxial-inlay knitted fabric base material was 61.3 μm.

(Comparative Example 3)

A multiaxial-inlay knitted fabric base material was obtained in the same manner as in Example 1, except that the heating temperature in the roll-pressing treatment was set to 80°C.
The opening width in the obtained multiaxial-inlay knitted fabric base material was 109.9 μm.

(Example 11)

Four multiaxial-inlay knitted fabric base materials obtained in Example 1 were laminated, a resin obtained by mixing an epoxy resin for infusion molding (manufactured by Nagase ChemteX Corporation, XNR6815) and a curing agent (manufactured by Nagase ChemteX Corporation, XNH6815) at a mass ratio of 100 : 27 was impregnated by a VaRTM method, and molding was conducted under curing conditions of a curing temperature of 80°C and a curing time of 2 hours, thereby obtaining a CFRP panel having a thickness of about 2 mm.
The surface roughness Ra of the obtained CFRP panel was 0.12 μm.

(Comparative Example 4)

A CFRP panel was obtained in the same manner as in Example 11, except that the multiaxial-inlay knitted fabric base material obtained in Comparative Example 1 was used instead of the multiaxial-inlay knitted fabric base material obtained in Example 1.
The surface roughness Ra of the obtained CFRP panel was 0.38 μm.

(Examples 12 to 20)

The surface roughness Ra of a CFRP panel obtained in the same manner as in Example 11, except that the multiaxial-inlay knitted fabric base material obtained in each of Examples 2 to 10 was used instead of the multiaxial-inlay knitted fabric base material obtained in Example 1, was 0.15 μm or less.

(Comparative Examples 5 and 6)

The surface roughness Ra of a CFRP panel obtained in the same manner as in Example 11, except that the multiaxial-inlay knitted fabric base material obtained in each of Comparative Examples 2 and 3 was used instead of the multiaxial-inlay knitted fabric base material obtained in Example 1, was 0.20 $\mu$m or more.

Regarding the multiaxial-inlay knitted fabric base materials of Examples 1 to 10 produced according to the method for producing a multiaxial-inlay knitted fabric base material of the invention, the opening width thereof was equal to or less than a nominal diameter of the used stitching thread of 83.1 $\mu$m and the opening was sufficiently shrunk.

Further, the CFRP panel that is a fiber-reinforced composite material including the multiaxial-inlay knitted fabric base material of the invention was excellent in surface smoothness.

On the other hand, regarding the multiaxial-inlay knitted fabric base materials of Comparative Example 1 and Comparative Example 2 in which the pressurization and heating treatment in the method for producing a multiaxial-inlay knitted fabric base material of the invention was not conducted, the opening width thereof was larger than a nominal diameter of the used stitching thread of 84.2 $\mu$m. Similarly, also regarding the multiaxial-inlay knitted fabric base material of Comparative Example 3 which was subjected to the pressurization and heating treatment at the heating temperature lower than the heating temperature in the method for producing a multiaxial-inlay knitted fabric base material of the invention, the opening width thereof was larger than a nominal diameter of the used stitching thread of 84.2 $\mu$m and the opening was not sufficiently shrunk.

Further, the CFRP panels that are fiber-reinforced composite materials including these multiaxial-inlay knitted fabric base materials had inferior surface smoothness.

INDUSTRIAL APPLICABILITY

According to the method for producing a multiaxial-inlay knitted fabric base material of the invention, it is possible to produce a multiaxial-inlay knitted fabric base material that enables to obtain a molded article which is excellent in surface smoothness and has a high strength and a high elastic modulus, with high productivity.

By using the multiaxial-inlay knitted fabric base material of the invention, it is possible to obtain a molded article which is excellent in surface smoothness and has a high strength and a high elastic modulus.

Since the fiber-reinforced composite material of the invention includes the multiaxial-inlay knitted fabric base material of the invention, the fiber-reinforced composite material is excellent in surface smoothness and has a high strength and a high elastic modulus.

EXPLANATIONS OF LETTERS OR NUMERALS

1 MULTIAXIAL-INLAY KNITTED FABRIC BASE MATERIAL PRECURSOR
10 FIRST REINFORCING FIBER SHEET
12 REINFORCEMENT FIBER
20 SECOND REINFORCING FIBER SHEET
22 REINFORCEMENT FIBER
30 MULTIAXIAL STACK
40 RESTRAINING KNITTED FABRIC
42 STITCHING THREAD
44 PENETRATION SITE OF SINKER LOOP OF STITCHING THREAD
50 OPENING

**Claims**

1. A method for producing a multiaxial-inlay knitted fabric base material, the method comprising:

   conducting a pressurization and heating treatment to a multiaxial-inlay knitted fabric base material precursor that includes a multiaxial stack, which is formed by stacking two or more of reinforcing fiber sheets in which a plurality of reinforcement fibers are aligned in one axis direction, and a stitching thread, which is disposed to restrain the multiaxial stack and formed from a material having a glass transition temperature and a melting point, wherein a heating temperature in the pressurization and heating treatment is a temperature higher than the glass transition temperature of the stitching thread by 10°C or higher and lower than the melting point of the stitching thread by 10°C or higher.

2. The method for producing a multiaxial-inlay knitted fabric base material according to claim 1, wherein the multiaxial stack is formed by stacking two or more of the reinforcing fiber sheets such that axis directions of reinforcement fibers of the respective reinforcing fiber sheets become two or more.

3. The method for producing a multiaxial-inlay knitted fabric base material according to claim 1 or 2, wherein the stitching thread forms a restraining knitted fabric.

4. The method for producing a multiaxial-inlay knitted fabric base material according to any one of claims 1 to 3, wherein a load line pressure in the pressurization and heating treatment is 15 N/cm or more and 150 N/cm or less.

5. The method for producing a multiaxial-inlay knitted fabric base material according to any one of claims 1 to 4, wherein pressurizing and heating are simultaneously conducted in the pressurization and heating treatment.

6. The method for producing a multiaxial-inlay knitted fabric base material according to any one of claims 1 to 5, wherein the reinforcement fiber is a carbon fiber.

7. The method for producing a multiaxial-inlay knitted fabric base material according to any one of claims 1 to 6, wherein the stitching thread is formed from one or more materials selected from the group consisting of polyester and nylon.

8. A multiaxial-inlay knitted fabric base material comprising a multiaxial stack, which is formed by stacking two or more of reinforcing fiber sheets in which a plurality of reinforcement fibers are aligned in one axis direction, and a stitching thread, which is disposed to restrain the multiaxial stack,
   wherein a nominal diameter d [$\mu$m] of the stitching thread defined as follows by using a fineness s (dtex), a density $\rho$ (g/cm$^3$), and a circumference ratio $\pi$ of the stitching thread:

   [Math. 1]

   $$d = 20 \times \sqrt{s / (\rho \times \pi)}$$

   and an opening width D [$\mu$m] of the reinforcement fiber generated in a site through which the stitching thread penetrates to the reinforcing fiber sheet satisfy Formula (1).

   $$D \leq d \qquad (1)$$

9. The multiaxial-inlay knitted fabric base material according to claim 8, wherein the reinforcement fiber is a carbon fiber.

10. The multiaxial-inlay knitted fabric base material according to claim 8 or 9, wherein the stitching thread is formed from one or more materials selected from the group consisting of polyester and nylon.

11. The multiaxial-inlay knitted fabric base material according to any one of claims 8 to 10, wherein the stitching thread forms a restraining knitted fabric.

12. The multiaxial-inlay knitted fabric base material according to claim 11, wherein a knitting structure of the restraining knitted fabric is one or more knitting structures selected from the group consisting of chain stitch, single tricot stitch, and tricot pillar stitch.

13. A fiber-reinforced composite material comprising the multiaxial-inlay knitted fabric base material according to any one of claims 8 to 12, and a matrix resin.

*FIG. 1*

## FIG. 2

## INTERNATIONAL SEARCH REPORT

| International application No. |
| --- |
| PCT/JP2016/086183 |

### A. CLASSIFICATION OF SUBJECT MATTER

*D04H3/04*(2012.01)i, *B32B5/00*(2006.01)i, *B32B5/02*(2006.01)i, *B32B5/06*(2006.01)i, *B32B5/12*(2006.01)i, *D04B21/14*(2006.01)i

According to International Patent Classification (IPC) or to both national classification and IPC

### B. FIELDS SEARCHED

Minimum documentation searched (classification system followed by classification symbols)
D04B1/00-1/28;    21/00-21/20,    D04H1/00-18/04,    B32B1/00-43/00,
B29C41/00-41/36;
41/46-41/52; 67/12-67/18, B29B11/16; 15/08-15/14; C08J5/04-5/10; 5/24

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2007-160587 A  (Toray Industries, Inc.), 28 June 2007 (28.06.2007), claims; paragraph [0025]; examples (Family: none) | 1-3,5-13 |
| X | JP 2002-227068 A  (Toray Industries, Inc.), 14 August 2002 (14.08.2002), claims; paragraphs [0026] to [0036] (Family: none) | 1-3,5-13 |
| X | JP 2010-047875 A  (Toyota Industries Corp.), 04 March 2010 (04.03.2010), claims; paragraph [0029] (Family: none) | 13 |

☒  Further documents are listed in the continuation of Box C.   ☐   See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 10 February 2017 (10.02.17) | 21 February 2017 (21.02.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/086183

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2002-227066 A  (Toray Industries, Inc.), 14 August 2002 (14.08.2002), claims; paragraph [0025] (Family: none) | 13 |
| X | JP 2009-090474 A  (Asahi Kasei Fibers Corp.), 30 April 2009 (30.04.2009), claims; paragraphs [0015], [0017] (Family: none) | 13 |
| X | JP 2015-183196 A  (The Boeing Co.), 22 October 2015 (22.10.2015), claims; paragraph [0056] (Family: none) | 13 |
| A | JP 60-136386 U  (Toray Industries, Inc.), 10 September 1985 (10.09.1985), entire text (Family: none) | 1-13 |
| A | WO 2010/147231 A1  (Shindo Co., Ltd.), 23 December 2010 (23.12.2010), entire text (Family: none) | 1-13 |
| A | US 2009/0162604 A1  (OWENS CORNING), 25 June 2009 (25.06.2009), whole document & WO 2007/057430 A1     & EP 1951513 A1 | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015243446 A
- JP 2002227066 A